Europäisches Patentamt

European Patent Office

Office européen des brevets

(19)

(11) Publication number: **0 159 916**
A2

(12) **EUROPEAN PATENT APPLICATION**

(21) Application number: 85302698.7

(22) Date of filing: 17.04.85

(51) Int. Cl.⁴: **H 04 B 3/56**

(30) Priority: 17.04.84 US 601186

(43) Date of publication of application: 30.10.85
Bulletin 85/44

(84) Designated Contracting States: BE DE FR GB IT NL

(71) Applicant: HONEYWELL INC., Honeywell Plaza,
Minneapolis Minnesota 55408 (US)

(72) Inventor: Roth, Roger R., 13505 Inverness Road,
Minnetonka Minnesota 55343 (US)
Inventor: Hrdlicka, Gregory A., 14010 38th Place North,
Plymouth Minnesota 55441 (US)

(74) Representative: Harman, Michael Godfrey, Honeywell
Control Systems Ltd. Charles Square, Bracknell
Berkshire RG12 1EB (GB)

(54) **Passive RF signals coupler for power lines.**

(57) A passive signal coupler transfers RF data signals be-
ing transmitted over AC power lines from a first AC power
distribution system P1 to a second AC power distribution
system P2. Each leg of the passive signal coupler coupled to
a phase of the power line voltage includes a series LC circuit
(L1-C1 to L8-C8), tuned to the data signal carrier frequency.
Each leg coupled to the first power system is terminated in a
first winding of a transformer T1. Each leg coupled to the
second power system is terminated in a second winding of
the transformer. Shorting between the two power systems
can only occur on failure of at least 3 components – the trans-
former insulation and a capacitor on each side.

## PASSIVE RF SIGNAL COUPLER FOR POWER LINES

This invention relates to passive signal couplers for coupling RF signals over power lines, and more specifically for coupling such signals between different power distribution systems.

Power line carrier systems are used in a wide variety of applications, including environmental and energy management control, building and factory automation, remote lighting and process control. Such systems have obvious advantages compared to using dedicated or hard wiring.

In a large system, it is likely that the transceivers that transmit and receive data signals will be coupled to different power distribution systems. Also, the power systems may supply different voltages. Usually one power system is transformer-coupled to the other system. This is fine for providing power to operate equipment; however, the transformer attenuates the radio frequency signals required for the data signals transmission. Accordingly, the prior art has provided passive signal couplers to allow the data signals to bypass the transformers. These passive signal couplers couple the respective phases of the two power systems by means of a capacitor or a capacitor in series with an inductor.

This prior art solution, however, presents a serious safety hazard. In the event that a capacitor shorts out, then the two power distribution systems which may be supplying different voltages will be directly connected and serious equipmetn damage and possibly fire may result. It may be that the fuse breakers will prevent damage. However, now there is the problem of having a building without power and locating the source of the power failure before the building may again be used for its normal business function.

Accordingly, the object of the invention is to provide an improved data communication system wherein this problem is alleviated or overcome.

Accordingly the present invention provides a passive signal coupler for coupling radio frequency (RF) data signals between two alternating current (AC) power distribution systems so as to bypass a power transformer which couples the two power systems, characterized in that the coupler comprises:

a transformer consisting of two wires wound on a core;

a first network, passing RF signals but not AC power, coupling the first power system to one of the transformer windings; and

a second network, passing RF signals but not AC power, coupling the second power system to the other winding on the transformer.

A power system including a data communication system and embodying the present invention will now be described, by way of example, with reference to the drawings, in which:

Figure 1 is an overall block diagram of the power systems including typical devices transmitting and receiving data signals;

Figure 2 is a circuit diagram of the passive signal coupler; and

Figure 3 is a detailed drawing of the transformer of the passive signal coupler.

INTRODUCTORY SUMMARY

A number of AC voltage line are tapped off from a main power line by individual transformers to supply power for miscellaneous devices. Some of the devices which receive their power from these feeder voltage lines use the power system conductors to transmit and receive data signals generated at a radio frequency (RF). Some of these devices communicating with each other are on different power feeder lines. The power transformers designed to operate efficiently at 50/60 hertz will not transfer the RF data signals in the order of many kilohertz, therefore a passive signal coupler is wired in parallel with the power transformer.

Each phase leg and the neutral leg of the passive signal coupler includes a series LC network tuned to the carrier frequency of the data signal.

A transformer included in the passive signal coupler made up of a toroidal core and having the primary and secondary windings bifilar wound passes the RF data signal from one power line distribution system to the other without introducing the safety hazards. The insulation in the windings can withstand the high voltages which may be induced.

DETAILED_DESCRIPTION

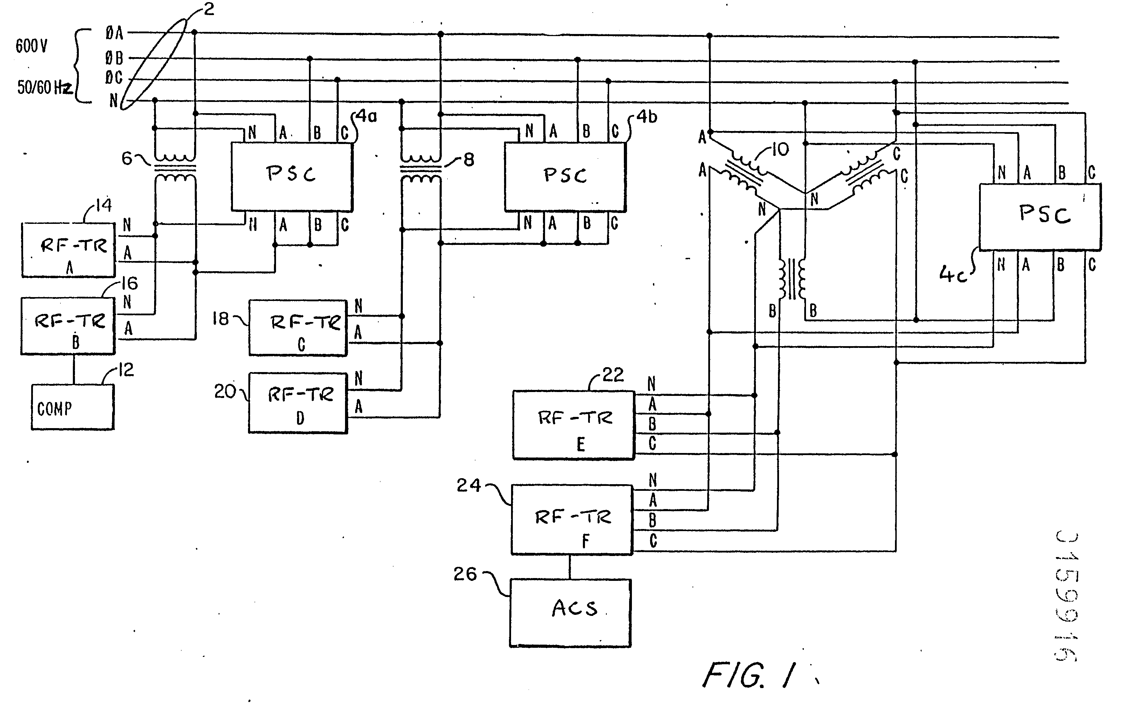

Figure 1 is a block diagram of a portion of an overall communications system wherein data signals are transferred between transceivers over existing AC power lines.

A high voltage AC power line 2 supplies power to a building or a complex of buildings as a 600V, 3 phase, 50 or 60 Hz supply. This is stepped down by transformers 6, 8 and 10 to one of a number of secondary voltages such as a 480V/277V wye, a 208V/120V wye, a 480V delta, a 240/120V delta (three phase) or a 120/240V delta (single phase).

A number of radio frequency (RF) transceivers RF-TR are coupled to the secondary voltage power lines. Thus the secondary power lines from transformer 6 are coupled to an RF transceiver A 14 and an RF transceiver B 16; the secondary power lines of transformer 8 are coupled to an RF transceiver C 18 and an RF transceiver D 20; and the secondary power lines of wye transformer 10 are coupled to an RF transceiver E 22 and an RF transceiver F 24.

Each of the transceivers 14 to 20 may be either a TM 740 B master transceiver or a TR 740 B remote transceiver. the TM 740B master transceiver exchanges communication data between an application unit, typically a computer, directly coupled to the master transceiver and the remote transceiver. The TR 740 B remote transceiver receives and transmits data information over AC power lines using a power line carrier RF signal. The remote transceiver responds to commands and requests for communication only from the master transceiver and only when commanded. Thus a computer COMP 12 is coupled to master transceiver B 16, and an air conditioning system ACS 26 is coupled to remote transceiver F 24. Under computer 12 control, master transceiver B 16 may send status request data signals to remote transceiver F 24 to query the temperature and humidity of the area controlled by the air conditioning system 26. The remote transceiver F 24 would transmit the data signals containing the temperature and humidity received from the air conditioning system 26 to the master transceiver B 16. The computer 12, upon receiving the temperature and humidity data signals from the master transceiver B 16, would send out new status information to the air conditioning system 26 if the computer 12 determined that the temperature or humidity was reading beyond either a high or low limit.

The data signals are represented by a carrier signal of 231.5 kHz for a logic ZERO and 234.5 kHz for a logic ONE for two-way data transmission, at a baud rate of 1200. The amplitude of the carrier signal may vary between 0.01V and 10V peak-to-peak. For one-way data transmission, the carrier frequencies are 130 kHz for a logic ZERO and 131 kHz for a logic ONE, at a transmission rate of 300 baud.

Since the RF transceivers 14 to 24 are transformer-coupled to power line 2, and the transformers 6, 8 and 10 will not pass the RF frequency data signals, a passive signal coupler PSC 4 is required to bypass each transformer 6, 8 and 10. The transformers 6, 8 and 10 are designed to operate most efficiently at 50/60 Hz. The passive signal coupler transfers the data carrier signals from one power system to another power system by bypassing the transformers 6, 8 and 10 coupling the power system. Thus the 231.5 kHz and 234.5 kHz data signals are transmitted between master transceiver 16 and remote transceiver 24 via the secondary power lines of transformer 6, passive signal coupler 4a, power lines 2, passive signal coupler 4c, and the secondary power lines of transformer 10.

Note that passive signal coupler 4a is coupled to a 2 wire single phase power line (neutral and phase A) and passive signal coupler 4c is coupled to a 4 wire three phase power line (neuatral, phase A, phase B, and phase C).

If the system includes a master transmitter communicating with a remote receiver wherein the data signals are transmitted in one direction only, that is, from the master transmitter to the remote receiver, then the data signal carrier frequency is 130 kHz. If the transmission is bi-directional, then the data signal carrier frequency is 233 kHz. This has the advantage of using the same power line for carrying data signals, simultaneously, to perform different functions. Of course, this requires two passive signal couplers in parallel, one for each frequency.

Referring to Figure 2, a passive coupler consists of two tuned networks 11 and 13, each connected to a respective one of the two power supplies, and a transformer T1 coupling the two networks. Each network consists of a set of series tuned LC circuits. For the 130/131 kHz frequency system, each tuned circuit may conveniently consist of a 0.056 uF capacitor and a 27 uH inductor; for the 231.5/234.5 kHz system, the values may conveniently be 0.033 uF and 15 uH. The Figure 2 coupler is for coupling a signal on any one of the phases of a power distribution system P1 to all phases of a power distribution system P2. Thus a data signal on phase A1 of system P1 will pass through the two tuned circuits L1-C1 and L4-C4 and one winding of transformer T1, and through the transformer onto all three phases A2, B2 and C2 of system P2 (relative to the neutral N2 of that system).

For comparison, one prior art coupler consists merely of a set of 4 capacitors, each coupling corresponding phases of the two systems P1 and P2 (i.e. A1 to A2, B1 to B2, etc.). Another prior art system consists merely of a set of 4 LC series tuned circuits, each coupling corresponding phases of the two systems P1 and P2. In these known systems, any single capacitor failure could short together two power systems supplying different voltages, with possible serious impact. The present system requires at least three component failures to short two power systems together.

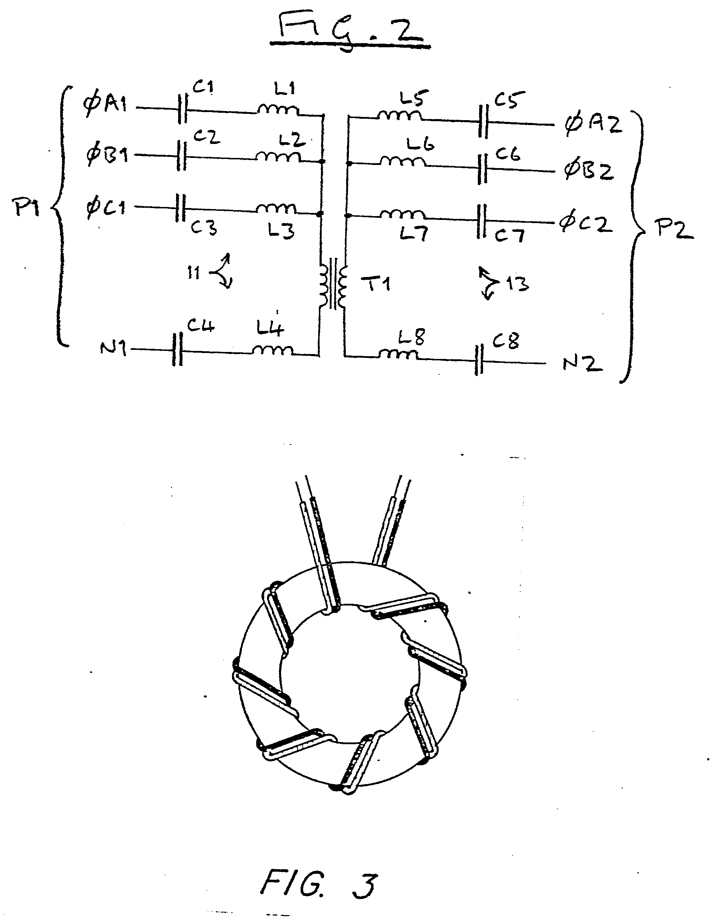

Figure 3 shows the mechanical structure of transformer T1 of Figure 2. The core is a toroidal core with outside diameter of 22mm, inside diameter of 13.7mm and thickness of 6.35mm. There are 7 turns of the two wires, insulated to a suitable standard such as Underwriters Laboratories 1015 standard. The two wires are bifilar wound. That is, in each turn the two wires are adjacent to each other. The use of two colours eases inspection and assembly of the transformer T1 into the passive signal coupler.

The magnetic properties of the toroidal core are as follows:-

| | |
|---|---|
| Pulse Permeability at 1000 Gauss | $5500 \pm 20\%$ |
| Initial Permeability | $5000 \pm 20\%$ |
| Temperature Stability $10^{\circ}$–$80^{\circ}$C | $\pm 15\%$ |
| Saturation Flux Density (2 oersteds) | 4000 Gauss |
| Remanence (2 oersteds) | 1000 Gauss |
| Coercivity (at H mx = 20) | .05 oersteds |
| Loss Factor at 100 kHz | $\leq 20 \times 10^{-6}$ |
| Hysteresis Factor 5-20 Gauss | $\leq 1 \times 10^{-6}$ |
| Curie Temperature | $\leq 140^{\circ}$ |

The bifilar winding of the conductors around the toroidal core provides for improved magnetic coupling of the transformer. The present passive signal coupler requires the failure of three components to short between the two power distribution systems (2 capacitors and the toroidal core winding).

- 7 -

## CLAIMS

1. A passive signal coupler for coupling radio frequency (RF) data signals between two alternating current (AC) power distribution systems (P1, P2) so as to bypass a power transformer (6, 8, or 10) which couples the two power systems, characterized in that the coupler comprises:
   a transformer (T1) consisting of two wires wound on a core;
   a first network (11), passing RF signals but not AC power, coupling the first power system (P1) to one of the transformer windings; and
   a second network (13), passing RF signals but not AC power, coupling the second power system (P2) to the other winding on the transformer.

2. A coupler according to claim 1 characterized in that each network comprises a set of series inductor-capacitor (LC) circuits (L1-C1, etc).

3. A coupler according to claim 2 for a 3-phase power system characterized in that the associated network comprises a plurality of series LC circuits coupling the different phases of the power system to the same end of the associated winding of the transformer, the other end of the winding being coupled to the neutral of the power system.

FIG. 1

## FIG. 2

## FIG. 3